(19) **Europäisches Patentamt**
**European Patent Office**
**Office européen des brevets**

(11) **EP 2 416 063 B1**

(12) # EUROPEAN PATENT SPECIFICATION

(45) Date of publication and mention
of the grant of the patent:
**26.08.2015 Bulletin 2015/35**

(51) Int Cl.:
*F21V 7/04* *(2006.01)*          *G02B 17/06* *(2006.01)*
*G02B 19/00* *(2006.01)*          *G02B 5/09* *(2006.01)*
*G02B 27/09* *(2006.01)*          *F21V 7/09* *(2006.01)*

(21) Application number: **10758084.7**

(22) Date of filing: **29.03.2010**

(86) International application number:
**PCT/ES2010/000131**

(87) International publication number:
**WO 2010/112637 (07.10.2010 Gazette 2010/40)**

(54) **AXISYMMETRIC REFLECTOR WITH FACETED STRUCTURE BASED ON THE GOLD NUMBER**

ACHSENSYMMETRISCHER REFLEKTOR MIT FACETTENSTRUKTUR AUF BASIS DER GOLDZAHL

RÉFLECTEUR DE RÉVOLUTION À STRUCTURE À FACETTES CONÇUE SELON LE NOMBRE D'OR

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **01.04.2009 ES 200930028**

(43) Date of publication of application:
**08.02.2012 Bulletin 2012/06**

(73) Proprietor: **Lledo Iluminación, SA**
**28935 Móstoles (ES)**

(72) Inventor: **GARCÍA RODRÍGUEZ, Lucas**
**E-28049 Madrid (ES)**

(74) Representative: **Naranjo Marcos, Maria Antonia et al**
**Alesci Naranjo Propriedad Industrial SL**
**Paseo de la Habana 200**
**28036 Madrid (ES)**

(56) References cited:
**EP-A2- 2 520 873          RU-C2- 2 155 979**
**US-A- 5 272 408          US-A- 5 683 175**
**US-A1- 2005 264 728          US-B1- 7 441 927**

**Description**

The present invention comprises an reflector for lighting which has an inner surface with a structure made up of facets arranged in a distribution based on the gold number, also known as the *Phi* number, $\Phi = (1+\sqrt{5})/2 \approx 1.618$. This structure has a non-regular (non-ordered) facet distribution, without radial alignment or symmetry of revolution, which enhances itsphotometric properties, providing greater uniformity of the light projected, free of the image of the light source, and free of the radial shadows and ring shadows inherent in the facet structure.

STATE OF THE TECHNOLOGY

A reflector directs the light generated by a light source in a controlled manner, making the appropriate lighting of the object to be lit possible - in terms of uniformity, distribution and levels of illuminance. Reflectors are generally made up of surfaces of revolution based on curves with a parabolic or elliptical profile or variations thereof. However, any lit light source emits spatial and angular light in a non-uniform manner. That is, there are luminance contrasts in the light source which could have negative effects on the distribution of the light projected. A reflector which has a completely smooth and mirrored surface finish, with a halogen lamp, will probably produce shadows due to the projected image of the wolfram coilturn of the lamp and, with a discharge lamp, the wire which holds up the burner.

There are two main strategies to avoid this phenomenon and provide a uniform luminance pattern, free of images and shadows. The first is to use a surface which does not have a completely specular reflection, that is, a reflective surface with a diffuse component - a matt or semi-matt surface. The surface of the reflector does not therefore act as a mirror and no image is formed. However, there is no optimum control over the direction of the light or the intensity distribution. Furthermore, the efficiency of the system is usually lower due to the fact that the number of reflections on the reflector increases.

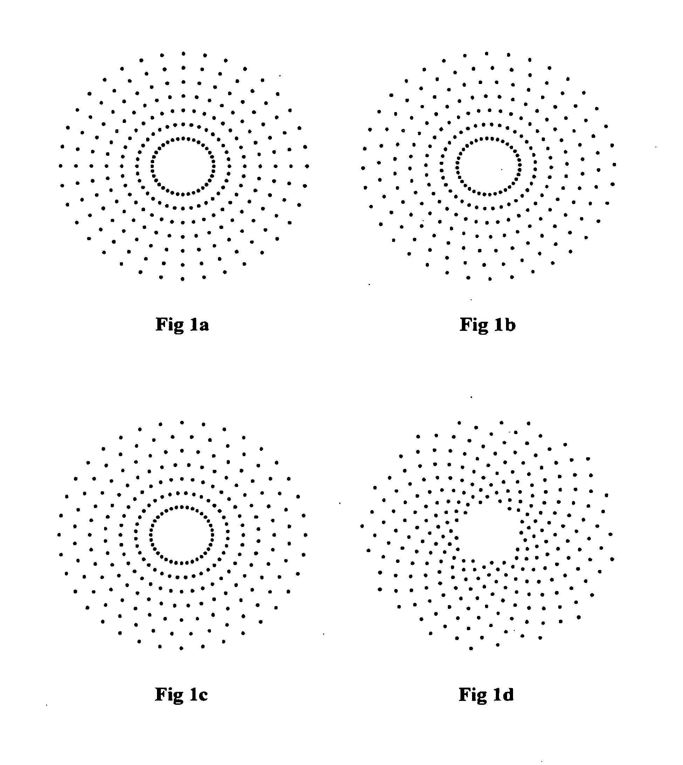

Another method which enables the destruction of the image of the light source, used in the majority of high-performance reflectors today, consists of giving the surface of the reflector an even structure made up of facets arranged in an ordered distribution. There are several types of arrangements of these facets. Figures 1a, 1b and 1c show the typical distributions. Each point represents the position of the facet in a view from a plane perpendicular to the axis of revolution of the reflector. Figure 1a shows a typical distribution with a radial alignment of facets which make up different rings. In Figure 1b there is an angular deviation between the facets of different rings, whereas in Figure 1c a radial alignment is obtained of facets between adjacent rings-angular deviation equal to half of the angular period.

These facet distributions enable the destruction of the image of the light source and control over the light distribution. However, the even faceted structure can itself cause shadows as a result of the overlapping of the image formed by each facet. In particular, these structures are liable to have:

- Radial shadows, due to the fact that all these structures have a radial alignment or arrangement of facets
- And/or ring shadows, due to the fact that all the structures have a symmetry of revolution in relation to the axis of revolution of the reflector

State of art shows different inventions such for example US 2005/0264728 Funahata Katsuyuki , this invention features a low cost transflective type liquid crystal display..the crystal performs transmission type display and reflection type display and includes a plurality of pixels surrounded on a subtract by a plurality of gate and source electrodes, the source electrodes arranged perpendicularly to the gate electrodes and a switching element arranged in each pixel, a pixel electrode connected to the switching element, the pixel electrode constituted of a transparent conductive layer and a conductive member with light reflection function. The mentioned invention is effective for providing a liquid crystal display with transflective electrodes having better transmission and reflection characteristics as well as is manufacture method.

In other words, according lo the present invention, a desired aperture factor for transmission display and reflection display can be determined by using the method which not only can randomly dispose a plurality of convex or concave conductive members as the light diffusion reflection elements but also can determine the tolal area of the convex or concave members. A transflective liquid crystal display can therefore be provided which matches the illumination conditions.

The patent and document described is merely a State of Art document with no relevance in this case it does not affect to the novelty or inventiveness step of the present invention shown.

OBJECT OF THE INVENTION

The present invention comprises an reflector which has an inner surface with a structure made up of facets arranged in a distribution based on the gold number (Figure 1d), also known as the *Phi* number, $\Phi = (1+\sqrt{5})/2 \approx 1.618$, which has a non-regular (non-ordered) facet distribution, without radial alignment or symmetry of revolution. Consequently, it enhances the destruction of the image of the light source and reduces the image of the faceted structure itself, providing a light pattern free of radial shadows (grooves) and ring shadows. It therefore enhances the uniformity of the light projected.

ADVANTAGES OF THE INVENTION

Shown below are the advantages of the present invention. These include, but are not limited to, the following:

- A greater degree of destruction of the image of the light source, as with the faceted structure inherent in the invention there are no preferential planes or directions of the light projected. The disorder in the arrangement of the facets thus provides a high level of destruction of the image formed.
- A reduction in the appearance of radial shadows in the luminance pattern of the light projected which are inherent in the faceted structure of the reflector, as this structure does not have radial alignment.
- A reduction in the appearance of ring shadows in the luminance pattern inherent in the faceted structure of the reflector, as this structure does not have symmetry of revolution.

DESCRIPTION OF THE DESIGNS

In order to better understand this report, attached below are diagrams which show some exemplary embodiments of the object of the invention, in which:

**Figure 1:** Different distributions of facets are shown in a view from a plane perpendicular to axis of revolution, in which each point represents a facet. All the distributions have the same number of facets. Figures 1a, 1b and 1c show the typical distributions. These have a radial arrangement and symmetry of revolution. Figure 1d represents a distribution based on the *Phi* number which is inherent in the invention. This distribution does not have a radial arrangement or symmetry of revolution and therefore enhances the photometric characteristics of the light projected.

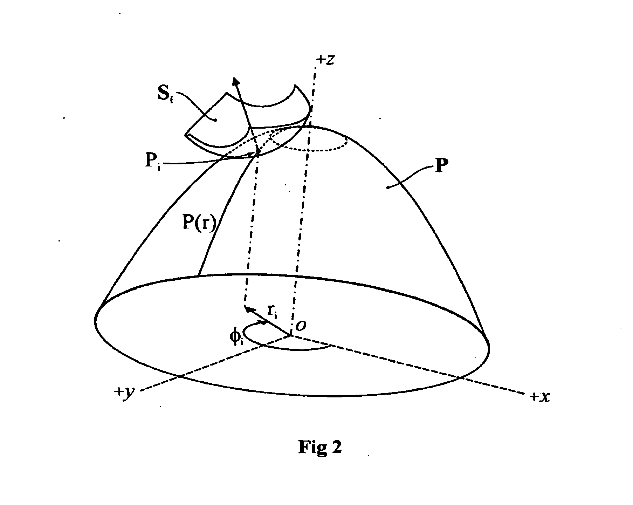

**Figure 2:** Surface **P** is shown, which results from the revolution of profile curve P(r) inherent in the reflector in relation to the axis of reflector *z*. Also shown is surface $S_i$, which contributes to the formation of the inner surface structure of the reflector. The point of tangency between surfaces **P** and $S_i$ takes place at $Pi = (r_i \cos \Phi_i, r_i \sin \Phi_i, P(r_i))$.

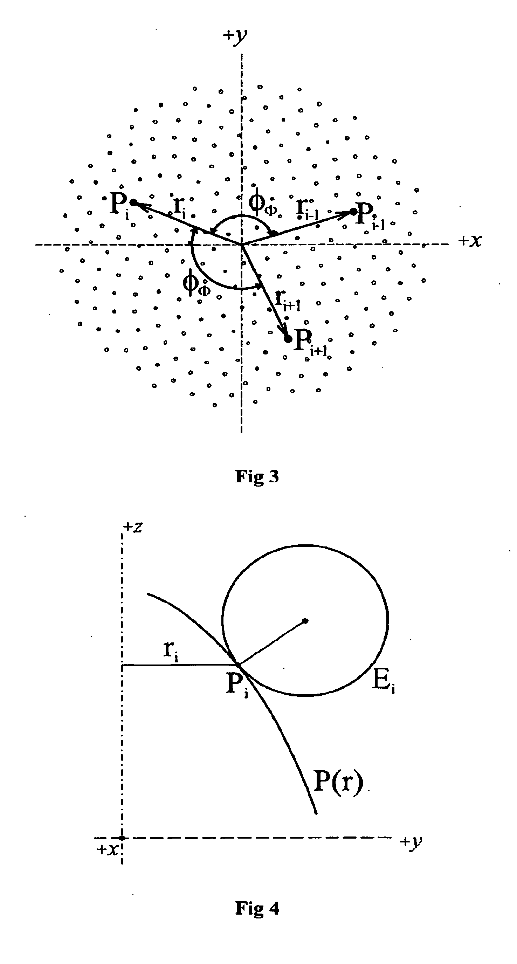

**Figure 3:** An arrangement based on the *Phi* number, inherent in the invention, is shown, in which each point represents point Pi of tangency between surface **P** and surface $S_i$. Three consecutive arbitrary points, Pi-1, Pi and Pi+1, are shown in bold type. At all points Pi the following holds true: $r_{i-1} \leq r_i \leq r_{i+1}$ and

$\Phi_i{+}_1 = \Phi_i + \Phi_\varrho,$ where $\Phi_\varrho$ is the golden angle.

**Figure 4:** The arrangement of a spherical surface $E_i$ is shown, tangent to profile curve P(r) at point Pi, which contributes to the formation of a faceted structure with a distribution inherent in the invention for the particular case of it being made up of facets with spherical surfaces.

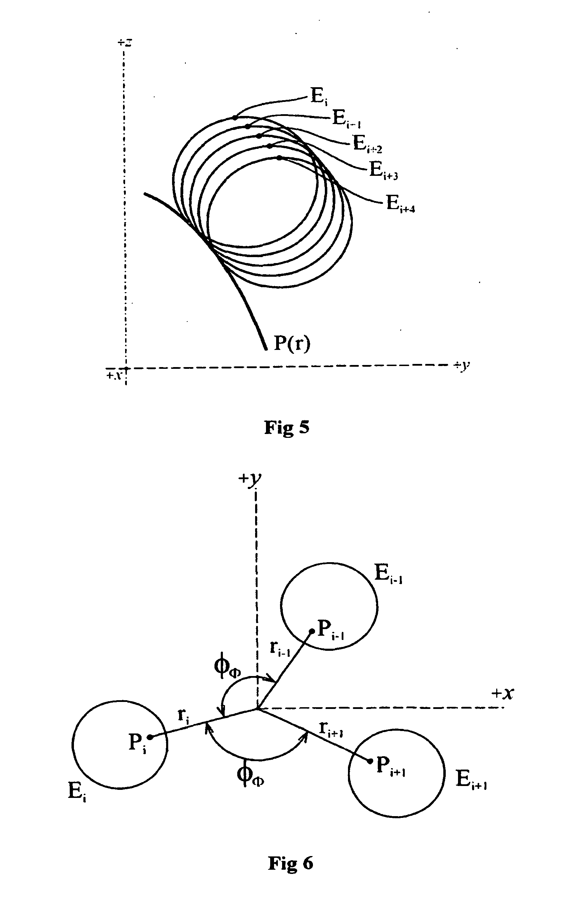

**Figure 5:** For the particular case of a reflector incorporating the invention which is made up of facets with spherical surfaces, a group of five consecutive arbitrary spheres is shown $\{E_i, E_i{+}_1, E_i{+}_2, E_i{+}_3, E_i{+}_4\}$. All of them are tangent to profile curve P(r) at $P_i \equiv (r_i \cos \Phi_i, r_i \sin \Phi_i, P(r_i))$ and the following holds true: $r_i \leq r_i{+}_1$.

**Figure 6:** The projection of three consecutive arbitrary spherical surfaces is shown, $E_i{-}_1$, $E_i$ and $E_i{+}_1$, on a plane perpendicular to axis z of the reflector. It can be seen that the angle formed by the projection of two consecutive points of tangency, Pi and $P_i{+}_1$, on a plane perpendicular to axis z of the reflector in relation to the origin is constant and equal to the golden angle, $\Phi_\varrho$.

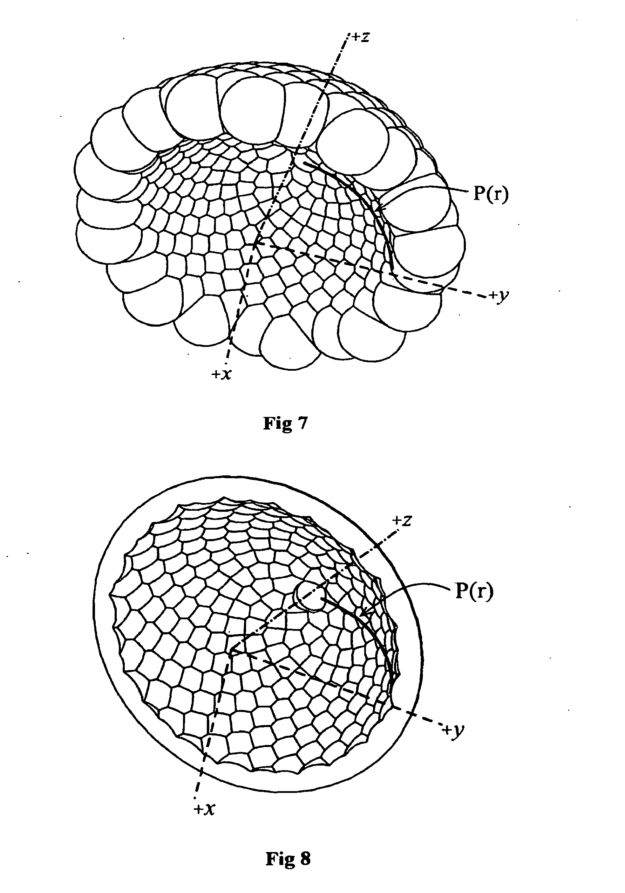

**Figure 7:** A three-dimensional geometry is shown which results from positioning spherical surfaces according to a distribution based on the *Phi* number which is inherent in the present invention, for the particular case of spherical surfaces.

**Figure 8:** A final reflector is shown for the particular case of spherical surfaces, which results from making a cross section of revolution according to the geometry shown in Figure 7, which provides a smooth surface on the external sides of the reflector and a faceted structure characteristic of the invention on the inner side of the reflector.

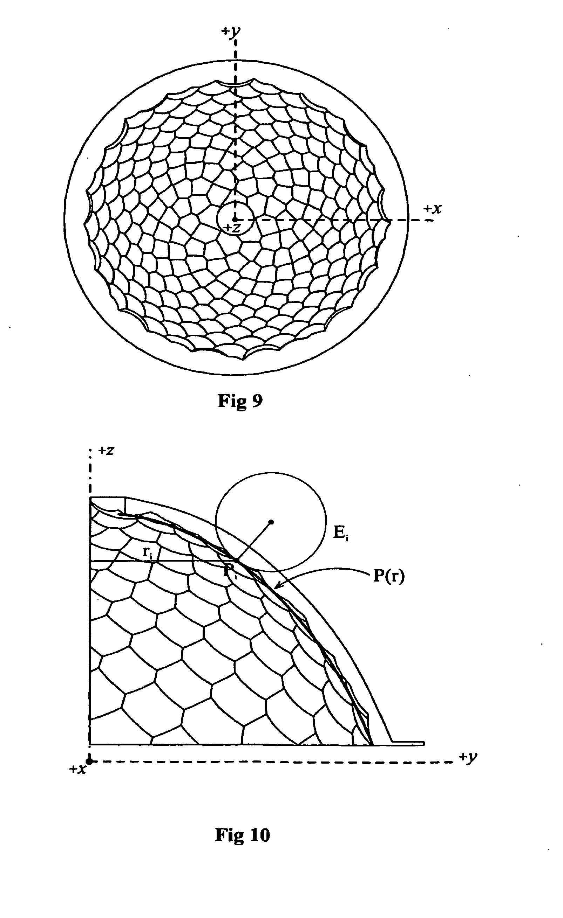

**Figure 9:** A plan view of a reflector incorporating the invention is shown.

**Figure 10:** A side view of a quarter of the reflector incorporating the invention is shown for the case of spherical facets resulting from a cross section along plane *YOZ* and another cross section along plane *XOZ*.

DESCRIPTION OF THE INVENTION

The present invention comprises a reflector which has an inner surface with a structure made up of facets arranged in a distribution based on the gold number (Figure 1d), which has a non-regular (non-ordered) facet arrangement, without radial alignment or symmetry of revolution. Consequently, it offers a higher degree of destruction of the source image, since the structure does not have preferential planes or directions as it is a non-ordered facet arrangement, and it reduces the image of the faceted structure itself, providing a light pattern free of radial shadows and ring shadows. It therefore has greater uniformity of the light projected.

**P** is the surface with symmetry of revolution in relation to axis z which results from the revolution of profile curve P(r) corresponding to the reflector. Moreover, $S_i$ is a surface such that it is tangent to surface **P** at point Pi. Surfaces **P** and $S_i$ are shown in Figure 2.

The group of surfaces $\{S_i\}_{i=1}...,N$, which determine the distribution of facets in the inner part of the reflector inherent in the invention, are tangent to surface **P**, with a point of tangency at point $P_i \equiv$ (n cos $\Phi_i$, $r_i$ sin $\Phi$ i, P($r_i$)), and the following holds true:

$$\Phi_{i+1} = \Phi_i + \Phi_Q.$$

and

$$r_{i+1} \geq r_i, \text{ for } i = 1, \ldots, N-1,$$

where N is the number of surfaces made up by the faceted structure, $\Phi_Q$ is the golden angle $\equiv 2\pi - (2\pi/\phi) \approx 2.4$ radians = 137.50 degrees, and $\Phi$ is the golden ratio, $\Phi \equiv (1+\sqrt{5})/2 \approx 1.618$. The above condition is illustrated in Figure 3.

DESCRIPTION OF A PARTICULAR EMBODIMENT

In order to better understand the object of the invention, detailed below is a description and the process of generation of a particular embodiment for the case of a faceted structure made up of spherical surfaces. Firstly, profile curve P(r) is defined (Figure 4). Subsequently, spherical surfaces $\{E_i\}_{i=1},...,N$ are positioned along profile curve P(r), tangent to it (Figure 5). Each sphere $E_i$ is turned i times the golden angle $\Phi_Q$ in relation to axis *z* of the reflector characteristic of the invention (Figure 7). To obtain the final reflector it is necessary to make a cross section of revolution so as to generate a smooth surface on the outer surfaces of the reflector (Figure 8).

**Claims**

1. A reflector with a faceted structure based on the gold number which is capable of offering a uniform luminance pattern of the light projected, the reflector having a non-regular facet distribution, without radial alignment or symmetry of revolution, made up of a sequence of surfaces $\{S_i\}_{i=1},...,N$ tangent to surface **P** resulting from the revolution of profile curve P(r) inherent in the reflector in relation to its axis of revolution at point Pi $\equiv r_i$ cos$\Phi_i$, $r_i$ sin$\Phi_i$, P($r_i$)), so that

$\Phi_{i+1} = \Phi_i + \Phi_Q$ and $r_{i+1} \geq r_i$, for i = 1, ..., N-1, where N is the number of surfaces $S_i$ which make up the faceted structure, is the golden angle, $\equiv 2\pi -$

$(2\pi/\phi) \approx 2.4$ radians $\approx 137.50$ degrees, and $\Phi$ is the golden ratio, $\Phi \equiv (1+\sqrt{5})/2 \approx 1.618$, **characterised by** the inner faceted structure of the reflector being made up of spherical surfaces.

**Patentansprüche**

1. Ein Reflektor mit facettierter Struktur auf der Grundlage der Goldenen Zahl, der in der Lage ist, ein gleichmäßiges Leuchtdichtenmuster des projizierten Lichts zu bieten; der Reflektor weist eine ungleichmäßige Facettenverteilung ohne radiale Ausrichtung oder Rotationssymmetrie auf, bestehend aus einer Sequenz von Oberflächen $\{S_i\}_i = _1, ...,N$, die tangential zur Oberfläche P sind und aus der Drehung der reflektorimmanenten Profilkurve P(r) im Verhältnis zu ihrer Drehachse am Punkt $P_i = r_i \cos\Phi_i$, $r_i \sin\Phi_i$, P($r_i$)), so dass $\Phi_{i+1} = \Phi_i + \Phi_Q$ und $r_{i+1} \geq r_i$, für i = 1, ..., N-1 sind; dabei ist N die Anzahl der Oberflächen $S_i$, die die facettierte Struktur bilden, $\Phi_Q$ der goldene Winkel $\equiv 2\pi - (2\pi/\Phi) \approx 2.4$ rad = 137.50 Grad, und $\Phi$ die goldene Zahl, $\Phi \equiv (1+\sqrt{5})/2 \approx 1.618$, **gekennzeichnet durch** die aus sphärischen Flächen bestehende innere facettierte Struktur des Reflektors.

**Revendications**

1. Un réflecteur à facettes conçu selon le nombre d'or qui permet un motif d'éclairage uniforme de la lumière projetée, le réflecteur ayant une distribution de la facette irrégulière, sans alignement radial ni symétrie de révolution, compose une surface de séquences $\{S_i\}_i = 1i...1N$ tangente à la surface P résultant de la révolution de la courbe de profil P(r) inhérent dans le réflecteur en rapport à son axe de révolution au Point Pi $\equiv r_i$ cos$\Phi_i$, $r_i$ sin$\Phi_i$ P($r_i$)), afin $\Phi_{i+1} = \Phi_i + \Phi_\varphi$ et $r_{i+1} \geq r_i$ pour i=1, ..., N-1, où N est le nombre de surfaces Si qui compose la structure à facettes, $\Phi_\varphi$i est l'angle d'or, $\equiv 2\pi - (2\pi/\Phi) \approx 2,4$ radians$\approx 137,50$ degrés, et $\Phi$ est le rayon d'or, $\Phi \approx (1+\sqrt{5})/2 \approx 1618$ **caractérisé par** l'intérieur de la structure à facettes du réflecteur qui compose des surfaces sphériques

**Fig 1a**

**Fig 1b**

**Fig 1c**

**Fig 1d**

**Fig 2**

**Fig 3**

**Fig 4**

**Fig 5**

**Fig 6**

**Fig 7**

**Fig 8**

**Fig 9**

**Fig 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050264728 A, Funahata Katsuyuki